# EUROPEAN PATENT SPECIFICATION

(11) **EP 3 971 943 B1**
(45) Date of publication and mention of the grant of the patent: **26.11.2025**
(21) Application number: 21197396.1
(22) Date of filing: 17.09.2021
(51) Int. Cl.: H01J 49/00

(54) **USING REAL TIME SEARCH RESULTS TO DYNAMICALLY EXCLUDE PRODUCT IONS THAT MAY BE PRESENT IN THE MASTER SCAN**
VERWENDUNG VON ECHTZEITSUCHERGEBNISSEN ZUM DYNAMISCHEN AUSSCHLUSS VON PRODUKTIONEN, DIE IM MASTER-SCAN VORHANDEN SEIN KÖNNEN
UTILISATION DES RÉSULTATS DE LA RECHERCHE EN TEMPS RÉEL POUR EXCLURE DYNAMIQUEMENT LES IONS DE PRODUITS QUI PEUVENT ÊTRE PRÉSENTS DANS LE BALAYAGE PRINCIPAL

(30) Priority: 21.09.2020 US 202017027021
(43) Date of publication of application: 23.03.2022
(73) Proprietor: Thermo Finnigan LLC, San Jose, CA 95134 (US)
(72) Inventor: McALISTER, Graeme C., San Jose, 95134 (US)
(74) Representative: Boult Wade Tennant LLP

(56) References cited:
- US-A1- 2006 243 900
- US-A1- 2016 268 112
- US-B1- 9 911 585
- US-B2- 10 573 501
- US-B2- 7 485 852
- L. C. GILLET ET AL: "Targeted Data Extraction of the MS/MS Spectra Generated by Data-independent Acquisition: A New Concept for Consistent and Accurate Proteome Analysis", MOLECULAR & CELLULAR PROTEOMICS, vol. 11, no. 6, 18 January 2012 (2012-01-18), XP055201307, ISSN: 1535-9476, DOI: 10.1074/mcp.O111.016717
- PETER MCQUEEN ET AL: "Information-dependent LC-MS/MS acquisition with exclusion lists potentially generated on-the-fly: Case study using a whole cell digest of Clostridium thermocellum", PROTEOMICS, vol. 12, no. 8, 1 April 2012 (2012-04-01), pages 1160 - 1169, XP055139107, ISSN: 1615-9853, DOI: 10.1002/pmic.201100425

## Description

### FIELD

The present disclosure generally relates to the field of ion chromatography including using real time search results to dynamically exclude product ions that may be present in the master scan.

### INTRODUCTION

Mass spectrometers are often coupled with chromatography systems in order to identify and characterize eluting species from a test sample. In such a coupled system, the eluent is ionized, and a series of mass spectral scans are obtained for subsequent data analysis. As the test sample may contain many species or compounds, it is often desirable to be able to automatically determine or identify species or compounds of interest as they elute and to use those identifications to inform subsequent tandem mass spectra collection.

Tandem mass spectrometry, referred to as MSn, is a popular and widely used analytical technique whereby precursor ions derived from a sample are subjected to fragmentation under controlled conditions to produce product ions. Tandem mass spectrometry is a mode of operation that utilizes multiple stages of mass analysis with a collision or reaction process between each stage of mass analysis. Often this collision or reaction process is preceded by an ion selection step where one or more ions is isolated from the other precursor ions of the parent ion generation. The coupling of multiple stages of mass analysis provides the ability to determine or identify species or compounds of interest by providing additional information on the fragmentation or reaction characteristics of the compound. The product ion spectra contain information that is useful for structural elucidation and for identification of sample components with high specificity. Tandem mass spectrometry having two stages of mass analysis is typically referred to as MS/MS or MS2.

In data dependent mode, the eluting sample is automatically analyzed by the mass spectrometer. A parent scan is first collected. Often this parent scan is simply an MS1 scan of all the species present in the ionized eluent. Using various algorithms and criteria, the mass spectrometer identifies ions in the parent scan for subsequent analysis by MS2. In some data dependent mass spectrometer methods, the instrument may then identify product ions in the MS2 scan for further analysis by higher order MSn scans. The criteria used for precursor ion identification can be as simple as an intensity threshold or a charge state requirement. Or it may involve more complex filtering such as a dynamic exclusion list where ions previously selected for MSn analysis are excluded form additional MSn analysis for a user defined period of time.

In a typical MS2 experiment, the number of precursors that can be analyzed is limited by the chromatographic peak width and the time it takes the mass spectrometer to collect MS2 scans. From the foregoing it will be appreciated that a need exists for minimizing redundancies in the data collected during a data dependent MS2 analysis. US 2006/243900 A1 discloses real-time analysis of mass spectrometry data for identifying peptidic data of interest. The mass spectrometry system comprises: a mass spectrometer; and a controller connected to the mass spectrometer. The controller is configured to: direct the mass spectrometer to acquire a precursor ion spectrum of a sample stream; analyze, in real-time, the precursor ion spectrum to determine whether a first evaluation criterion is satisfied; if the first evaluation criterion is satisfied, direct the mass spectrometer to acquire a product ion spectrum of the sample stream; analyze, in real-time, the product ion spectrum to determine whether a second evaluation criterion is satisfied; and if the second evaluation criterion is satisfied, analyze the product ion spectrum to assign an identification to the product ion spectrum.

Peter McQueen et al. "Information-dependent LC-MS/MS acquisition with exclusion lists potentially generated on-the-fly: Case study using a whole cell digest of Clostridium thermocellum" in Proteomics 12 (2012) 1160-1169 (DOI: 10.1002/pmic.201100425) discloses a real-time graphic-processor-unit based search engine that performs a real-time spectral search of product ion spectra and selects a precursor ion for further analysis having a mass that is not on an exclusion list.

L. C. Gillet et al "Targeted Data Extraction of the MS/MS Spectra Generated by Data-Independent Acquisition: A New Concept for Consistent and Accurate Proteome Analysis" in Molecular & Cellular Proteomics 11(6), (2012), 0111.016717 (DOI: 10.1074/mcp.0111.016717) discloses a method of identifying and quantifying peptides in mass spectra.

US 7485852 B2 discloses a mass analysis method and mass analysis apparatus. A mass spectrum is obtained from a standard sample of healthy person, an ion is selected from the mass spectrum as a precursor ion, and a mass spectrum of the precursor ion is obtained. A mass spectrum is obtained from a sample of interest to be measured of patient, an ion other than the precursor ion of the standard sample is selected from the mass spectrum as a precursor ion, and a mass spectrum of the precursor ion is obtained. Identifications on peptide/protein specific to the standard sample and the sample to be measured, and common to both are conducted, and based on the results, comparative analysis on peptide/protein of the sample to be measured.

US 2016/268112 A1 discloses methods for data-dependent mass spectrometry of mixed biomolecular analytes. The method comprises mass analyzing a plurality of first-generation ion species generated from a sample portion; automatically recognizing, for each of at least one biomolecule species, a respective subset of m/z ratios corresponding to respective first-generation ion species generated from the each biomolecule species; selecting, from each recognized subset, a single representative m/z ratio; isolating a sub-population of ions having each representative m/z ratio from ions having other m/z ratios; and fragmenting each isolated sub-population of ions so as to generate second-generation ion species.

US 9911585 B1 discloses data-independent mass spectral data acquisition including data-dependent precursor-ion surveys. The method comprises: acquiring a series of survey mass spectra of first-generation ions generated from a sample; acquiring a series of fragment-ion mass spectra, each being a record of a respective set of fragment-ion species generated by fragmentation of a respective subset of the first-generation ions within a respective mass-to-charge isolation range; adjusting mass spectrometer operational parameters used to acquire a later one of the survey mass spectra based on results of an earlier one of the survey mass spectra; dividing the acquired series of fragment-ion mass spectra into a first group wherein an appearance of a fragment-ion species correlates with the appearance of a first-generation ion species observed in a survey mass spectrum and a second group wherein no obvious correlation is observed between fragment-ion species and first-generation ion species; and mathematically processing the spectra of the first and second groups by different mathematical procedures.

### SUMMARY

In a first aspect, a method is provided according to claim 1

In various embodiments of the first aspect, the mass-to-charge ratio added to the exclusion list can be based on the theoretical mass-to-charge ratio for the fragments of the compound identified.

In various embodiments of the first aspect, the mass-to-charge ratio added to the exclusion list can be based on the theoretical mass-to-charge ratio for the fragments of the compound identified and the mass accuracy or resolution of a mass analyzer used to collect the first mass spectrum. In particular embodiments, the first mass spectrum can be at a different mass accuracy or resolution than the second mass spectrum. In further embodiments, the first mass spectrum can be at a higher mass accuracy or resolution than the second mass spectrum. In further embodiments, performing a real-time spectral search can be based on a mass accuracy or resolution of the second mass spectrum and adding mass-to-charge ratios for the fragments to the exclusion list can be based on a mass accuracy or resolution of the first mass spectrum.

In various embodiments of the first aspect, adding mass-to-charge ratios for the fragments to an exclusion list can include peaks found in the second mass spectrum.

In various embodiments of the first aspect, adding mass-to-charge ratios for the fragments to an exclusion list can include theoretical fragments identified by the real-time spectral search. In particular embodiments, adding mass-to-charge ratios for the fragments to an exclusion list can include theoretical fragments identified by the real-time spectral search and not present in the second mass spectrum.

In particular embodiments, wherein performing a real-time spectral search can be based on a high fragmentation energy of the second mass spectrum and the fragments added to the exclusion list can be based on a low fragmentation energy of the compound identified in the second mass spectrum.

In various embodiments of the first aspect, wherein the fragment ions in the second mass spectrum can be generated by UVPD, ETD, ECD, or another fragmenting process that does not utilize collisions with neutral gas molecules. In particular embodiments, performing a real-time spectral search can be based on expected fragment ion patterns of a fragmentation process used in the second mass spectrum and the fragments added to the exclusion list can be based on standard neutral collision based fragmentation of the compound identified in the second mass spectrum.

In a second aspect, a mass spectrometer is provided according to claim 10.

In various embodiments of the second aspect, adding mass-to-charge ratios for the fragments to an exclusion list can include peaks found in the second mass spectrum.

In various embodiments of the second aspect, adding mass-to-charge ratios for the fragments to an exclusion list can include theoretical fragments of the compound identified by the real-time search.

In various embodiments of the second aspect, the real-time spectral search can be based on a high fragmentation energy of the second mass spectrum and the fragments added to the exclusion list can be identified based on a low fragmentation energy of the compound identified in the second mass spectrum.

In various embodiments of the second aspect, the fragment ions in the second mass spectrum can be generated by UVPD, ETD, ECD, or another fragmenting process that does not utilize collisions with neutral gas molecules. In particular embodiments, performing a real-time spectral search can be based on expected fragment ion patterns of a fragmentation process used in the second mass spectrum and the fragments added to the exclusion list can be based on standard neutral collision based fragmentation of the compound identified in the second mass spectrum.

In various embodiments of the second aspect, wherein the first mass spectrum is at a different mass accuracy or resolution than the second mass spectrum.

In various embodiments of the second aspect, wherein the first mass spectrum is at a higher mass accuracy or resolution than the second mass spectrum. In particular embodiments, the real-time spectral search can be based on a mass accuracy or resolution of the second mass spectrum and the mass-to-charge ratios added to the exclusion list can be based on a mass accuracy or resolution of the first mass spectrum.

In a third aspect, a mass spectrometer can include an ion source, a first mass analyzer, a second mass analyzer, and a controller. The ion source can be configured to ionize a sample to produce ions. The first mass analyzer can be configured to produce a first mass spectrum at a first mass accuracy or resolution. The second mass analyzer can be configured to produce a second mass spectrum at a second mass accuracy or resolution. The controller can be configured to obtain a first mass spectrum using the first mass analyzer; select a first peak of the first mass spectrum; fragment and analyze ions of the first peak to obtain a second mass spectrum using the second mass analyzer; perform a real-time spectral search for compounds corresponding to peaks in the second mass spectrum; identify fragments for the compounds identified based on the real-time spectral search; add mass-to-charge ratios for the fragments to an exclusion list; select a second peak from the first mass spectrum and not on the exclusion list; and fragment and analyze ions of the second peak to obtain a third mass spectrum using the second mass analyzer.

In various embodiments of the third aspect, the first mass accuracy or resolution can be different than the second mass accuracy or resolution. In particular embodiments, the first mass accuracy or resolution can be higher than the second mass accuracy or resolution.

In various embodiments of the third aspect, adding mass-to-charge ratios for the fragments to an exclusion list can include peaks found in the second mass spectrum.

In various embodiments of the third aspect, adding mass-to-charge ratios for the fragments to an exclusion list can include theoretical fragments found based upon the compound identified in the real-time search.

In various embodiments of the third aspect, the real-time spectral search can be based on a high fragmentation energy of the second mass spectrum and the fragments added to the exclusion list can be based on a low fragmentation energy of the compound identified by the real-time search.

In various embodiments of the third aspect, the fragment ions in the second mass spectrum can be generated by UVPD, ETD, ECD, or another fragmenting process that does not utilize collisions with neutral gas molecules. In particular embodiments, performing a real-time spectral search can be based on expected fragment ion patterns of a fragmentation process used in the second mass spectrum and the fragments added to the exclusion list can be based on standard neutral collision based fragmentation of the compound identified in the second mass spectrum.

In various embodiments of the third aspect, the real-time spectral search can be based on the second mass accuracy or resolution and adding mass-to-charge ratios for the fragments to the exclusion list can be based on the first mass accuracy or resolution.

### DRAWINGS

For a more complete understanding of the principles disclosed herein, and the advantages thereof, reference is now made to the following descriptions taken in conjunction with the accompanying drawings, in which:
Figure 1 is a block diagram of an exemplary mass spectrometry system, in accordance with various embodiments.
Figure 2 is a flow diagram illustrating a method data dependent analysis, in accordance with various embodiments.
Figure 3A is a base peak chromatogram and two selected ion chromatograms for the peptide ion IGAEVYHNLK and the y9-fragment of that peptide. Figures 3B, 3C, 3D are mass spectra of the Full MS scan, and the MS2 spectra illustrating data dependent analysis of the peptide ion IGAEVYHNLK and the y9-fragment of that peptide.
Figure 4 is a flow diagram illustrating a method data dependent analysis using real time search results to inform peak selection, in accordance with various embodiments.
Figure 5 is a block diagram of an exemplary system for performing data dependent analysis using real time search results to inform peak selection, in accordance with various embodiments.

It is to be understood that the figures are not necessarily drawn to scale, nor are the objects in the figures necessarily drawn to scale in relationship to one another. The figures are depictions that are intended to bring clarity and understanding to various embodiments of apparatuses, systems, and methods disclosed herein. Wherever possible, the same reference numbers will be used throughout the drawings to refer to the same or like parts. Moreover, it should be appreciated that the drawings are not intended to limit the scope of the present teachings in any way.

### DESCRIPTION OF VARIOUS EMBODIMENTS

Embodiments of systems and methods to dynamically exclude product ions that may be present in the master scan are described herein.

The section headings used herein are for organizational purposes only and are not to be construed as limiting the described subject matter in any way.

In this detailed description of the various embodiments, for purposes of explanation, numerous specific details are set forth to provide a thorough understanding of the embodiments disclosed. One skilled in the art will appreciate, however, that these various embodiments may be practiced with or without these specific details. In other instances, structures and devices are shown in block diagram form. Furthermore, one skilled in the art can readily appreciate that the specific sequences in which methods are presented and performed are illustrative and it is contemplated that the sequences can be varied.

Unless described otherwise, all technical and scientific terms used herein have a meaning as is commonly understood by one of ordinary skill in the art to which the various embodiments described herein belongs.

It will be appreciated that there is an implied "about" prior to the temperatures, concentrations, times, pressures, flow rates, cross-sectional areas, etc. discussed in the present teachings, such that slight and insubstantial deviations are within the scope of the present teachings. In this application, the use of the singular includes the plural unless specifically stated otherwise. Also, the use of "comprise", "comprises", "comprising", "contain", "contains", "containing", "include", "includes", and "including" are not intended to be limiting. It is to be understood that both the foregoing general description and the following detailed description are exemplary and explanatory only and are not restrictive of the present teachings.

As used herein, "a" or "an" also may refer to "at least one" or "one or more." Also, the use of "or" is inclusive, such that the phrase "A or B" is true when "A" is true, "B" is true, or both "A" and "B" are true. Further, unless otherwise required by context, singular terms shall include pluralities and plural terms shall include the singular.

A "system" sets forth a set of components, real or abstract, comprising a whole where each component interacts with or is related to at least one other component within the whole.

### MASS SPECTROMETRY PLATFORMS

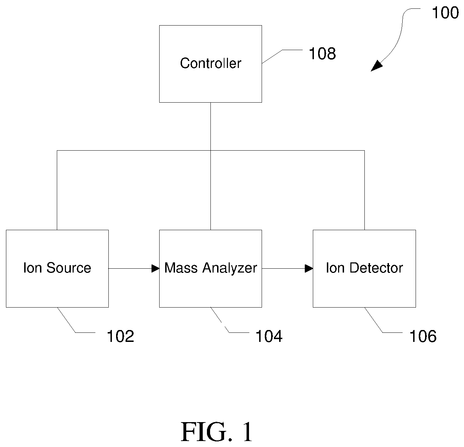

Various embodiments of mass spectrometry platform 100 can include components as displayed in the block diagram of Figure 1. In various embodiments, elements of Figure 1 can be incorporated into mass spectrometry platform 100. According to various embodiments, mass spectrometer 100 can include an ion source 102, a mass analyzer 104, an ion detector 106, and a controller 108.

In various embodiments, the ion source 102 generates a plurality of ions from a sample. The ion source can include, but is not limited to, a matrix assisted laser desorption/ionization (MALDI) source, electrospray ionization (ESI) source, atmospheric pressure chemical ionization (APCI) source, atmospheric pressure photoionization source (APPI), inductively coupled plasma (ICP) source, electron ionization source, chemical ionization source, photoionization source, glow discharge ionization source, thermospray ionization source, and the like.

In various embodiments, the mass analyzer 104 can separate ions based on a mass-to-charge ratio (m/z) of the ions. For example, the mass analyzer 104 can include a quadrupole mass filter analyzer, a quadrupole ion trap analyzer, a time-of-flight (TOF) analyzer, an electrostatic trap mass analyzer (e.g., ORBITRAP mass analyzer), Fourier transform ion cyclotron resonance (FT-ICR) mass analyzer, and the like. In various embodiments, the mass analyzer 104 can also be configured to fragment the ions using collision induced dissociation (CID) electron transfer dissociation (ETD), electron capture dissociation (ECD), photo induced dissociation (PID), surface induced dissociation (SID), and the like, and further separate the fragmented ions based on the mass-to-charge ratio.

In various embodiments, the mass spectrometry platform 100 can include multiple mass analyzers. In this way, mass analysis can be performed on two sets of ions at the same time. Additionally, the mass analyzers may have different mass accuracies and/or resolutions, such as a high-resolution electrostatic trap mass analyzer and a lower resolution quadrupole mass analyzer or ion trap mass analyzer.

In various embodiments, the ion detector 106 can detect ions. For example, the ion detector 106 can include an electron multiplier, a Faraday cup, and the like. Ions leaving the mass analyzer can be detected by the ion detector. In various embodiments, the ion detector can be quantitative, such that an accurate count of the ions can be determined.

In various embodiments, the controller 108 can communicate with the ion source 102, the mass analyzer 104, and the ion detector 106. For example, the controller 108 can configure the ion source 102 or enable/disable the ion source 102. Additionally, the controller 108 can configure the mass analyzer 104 to select a particular mass range to detect. Further, the controller 108 can adjust the sensitivity of the ion detector 106, such as by adjusting the gain. Additionally, the controller 106 can adjust the polarity of the ion detector 106 based on the polarity of the ions being detected. For example, the ion detector 106 can be configured to detect positive ions or be configured to detected negative ions.

### DATA DEPENDENT ANALYSIS

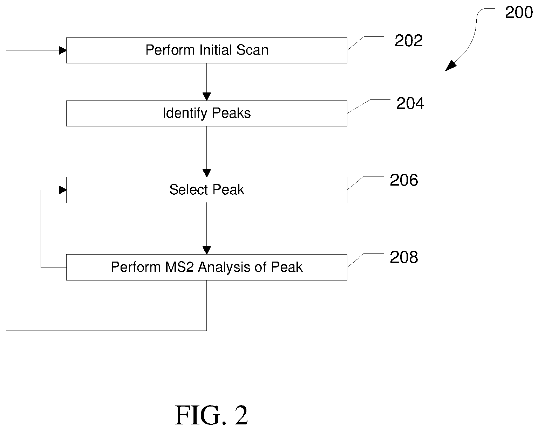

Figure 2 is a flow diagram illustrating a method of data dependent analysis 200. At 202, a survey scan can be performed. The survey scan can be used to identified precursor ions present in the ionized eluent for further analysis. Generally, the precursor scan can be performed without intentional fragmentation, such as by utilizing low trapping energy that is below the threshold needed to cause significant fragmentation. Even while attempting to avoid fragmentation, some degree of fragmentation may be inevitable because a minimal amount of trapping energy is needed for efficient ion transfer. Also, low levels of fragmentation can occur elsewhere in the instrument, such as in the ion source. In some instances, certain ions may be particularly prone to fragmentation.

At 204, peaks can be identified in the survey scan spectra (MS1 spectra). Various techniques are known in the art to identify peaks from a mass spectrum. Typically, some approximation of the center of the peak is used to identify the mass-to-charge ratio of an ion.

At 206, a peak can be selected for analysis. In various embodiments, a precursor ion with the highest abundance can be selected. In other embodiments, precursors may be selected at least in part based on an inclusion list. The inclusion list can include mass-to-charge ratios or m/z ranges of particular interest, and when ions are detected within those ranges, they can be selected for MS2 analysis. In further embodiments, an exclusion list can be used to avoid listed precursor ions, such as a precursor ion that was previously analyzed. Many other criteria have been employed to select ions for analysis. Often these criteria are combined together to compromise a list of rules. These additional criteria include but aren't limited too: charge state, monoisotopic m/z assignment, isotope ratio, and mass difference.

At 208, the MS2 analysis can be performed on the selected peak. In the first stage, the precursor ion can be selected based on the mass-to-charge ratio identified from the survey scan. The selected ion can be fragmented to produce product ions and then the mass-to-charge ratios of the product ions can be measured.

After the product ions are measured, another peak can be selected for analysis at 206. Additionally, an additional survey scan at 202 can be performed periodically as the ions and their identities can change throughout a chromatographic run.

Data-dependent methods can be slowed down when they trigger MS2 spectra on product ions present in the MS1 parent scans. These product ions in the master scan can be formed during a variety of different MS events (ionization, transfer, trapping). During a typical data-dependent method the mass spectrometer will trigger MS2 spectra on these product ions if they meet all the standard method filters (e.g., the product ion is abundant enough in the MS1 scan to satisfy an intensity filter). However, in most cases the mass spectrometer method would produce more informative data if the instrument selected a new precursor ion for fragmentation.

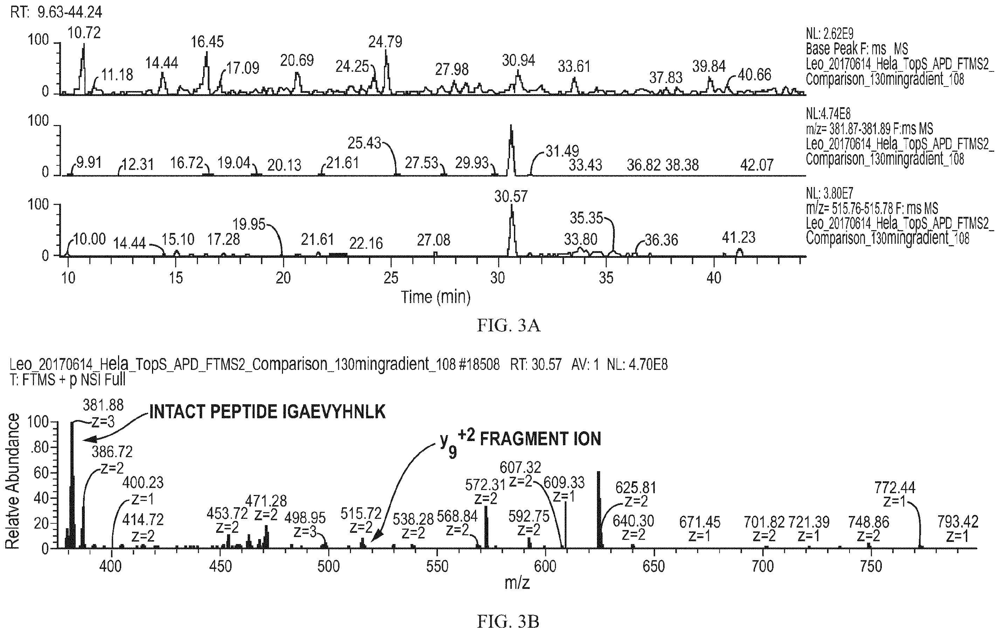

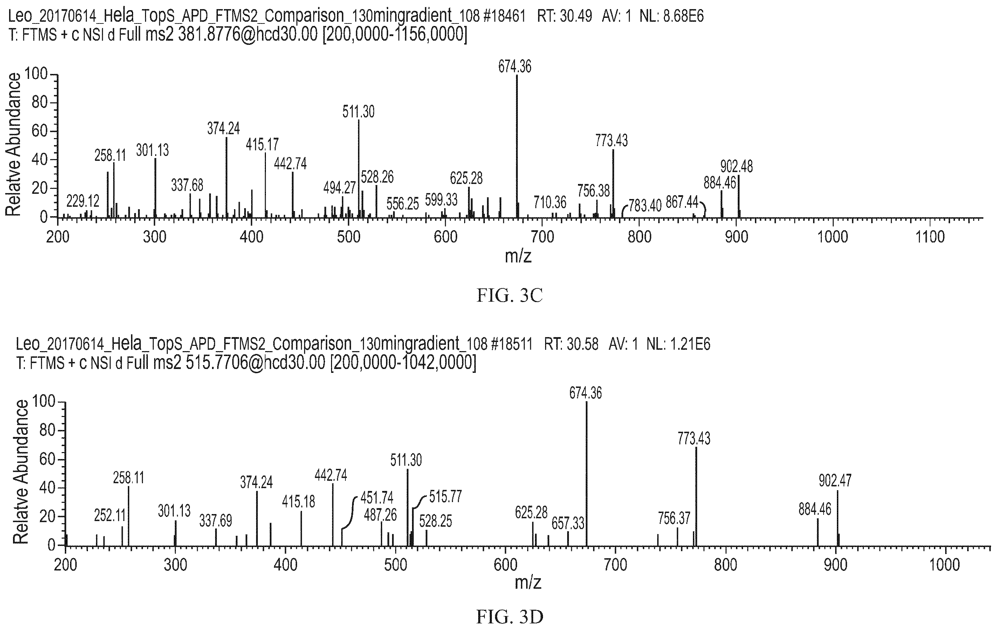

Figures 3A, 3B, 3C, and 3D illustrate an example of this phenomenon. In this case a complex HeLa digest is analyzed using a 130-minute LC-MS2 method. The data dependent MS2 method uses the standard set of filters (charge state, dynamic exclusion, monoisotopic m/z assignment, etc.). During the LC-MS2 analysis there is a moderately intense peptide (IGAEVYHNLK) eluting at a retention time of ~30.5 minutes and ionizing at 381.88 m/z. Figure 3A is a chromatogram illustrating the presence of this peptide at about 30.57 minutes, showing both the XIC of the parent ion at 381.88 m/z and a product ion at 515.77 m/z. While the mass of the product ion is smaller than the parent ion, the mass-to-charge ratio (m/z) is larger due to loss of a charge on the product ion.

Figure 3B shows the survey scan illustrating the presence of the peptide at 381.88 m/z. The y₉⁺² fragment ion is also present in the survey scan at 515.77 m/z. Under conditions where the y₉⁺² fragment ion meets the selection criteria for the data dependent analysis, both the peptide and the fragment ion can be selected for MS2 analysis. Figure 3C shows the MS2 spectrum of the parent ion and Figure 3D shows the MS2 spectrum of the y₉⁺² fragment ion. It is apparent from a comparison of the MS2 spectra of the precursor peptide and the y₉⁺² fragment ion that both MS2 spectra are derived from the same parent peptide. Both spectra have nearly identical sets of lower m/z y-type ions (y₂ at 374.23 m/z, y₃ at 511.30 m/z, and y₄ at 674.36 m/z).

The y₉⁺² fragment ion MS2 spectrum does not provide any additional information that was not already obtained during the fragmentation of the intact parent ion. This can have a greater effect than just a "wasted scan". The product ion MS2 spectrum hurts the overall analysis in two ways. First, by selecting this product ion for MS2 analysis, an opportunity could be missed to go after another MS1 peak that may have been more informative. Second, a database search may not be configured to handle identification of these product ion MS2 scans. As a result, there may not be a chance of producing a true positive peptide spectral match. Ultimately, the inclusion of these product ion MS2 scans in the analysis can skew the calculated false detection rate confidence threshold for the overall dataset, which in turn may result in other good search results being discarded.

Using real time spectral search results for data-dependent exclusion of product ions that may appear in the master scan can avoid performing MS2 scans of fragments of precursor ions that have already been analyzed. In the context of the example presented above, real time searching can involve matching the experimentally observed MS2 spectra against a database or using an algorithm using *de novo* analysis to identify the precursor ion. In various embodiments, the search can be performed using an algorithm such as Comet (see Comet: an open source tandem mass spectrometry sequence database search tool. Eng JK, Jahan TA, Hoopmann MR. Proteomics. 2012 Nov 12) or other algorithms known in the art.

In various embodiments, the theoretical m/z values of matched product ions can be placed on a dynamic exclusion list. In another embodiment, all the theoretical peptide fragment m/z values from the identified peptide sequence can be placed on the exclusion list.

Utilizing the real time search results in this manner can provide a couple of advantages. On hybrid instruments having multiple mass analyzers of different mass accuracy and/or resolution, the mass analyzer used for the MSn product spectra often isn't the same mass analyzer used for the MS1 scans. For example, MS2 product scans can be performed with an ion trap while precursor scans can be performed with an ORBITRAP mass analyzer. As such, simply placing the most intense observed MS2 product ions on the MS1 exclusion list could be problematic. For example, MS2 product ions may have been measured with a mass accuracy of +/- 0.5 Th and unit resolution in an ion trap while the MS1 scan can be measured with a mass accuracy of <3 ppm and resolution of >60k in the ORBITRAP mass analyzer. The use of wide exclusion windows based on the product ion data quality during the precursor spectral processing could potentially prevent the fragmentation of additional informative precursor ions which may be resolved by the higher resolution analyzer.

The real time search can also infer the presence of other MS2 product ions based upon the results of the real time compound identification. Figure 3B shows a moderately intense y₉⁺² fragment ion in the MS1 scan, yet the same ion is barely present in the MS2 spectrum in Figure 3C. Most likely during the MS2 fragmentation this large multiply charged product ion is fragmented multiple times and broken down into smaller y-type fragment ions at higher fragmentation energies used for the MS2 spectrum. Under the far gentler conditions of MS1 trapping, the y₉⁺² fragment ion is formed and retained at moderate intensity. Simply excluding the most intense ions in the MS2 parent scan could have missed excluding y₉⁺² fragment ion. The MS2 real time search results, both the intense observed product ions as well as other theoretical product ions that may not be present in the MS2 spectrum but could potentially show up in the MS1 scan can be excluded.

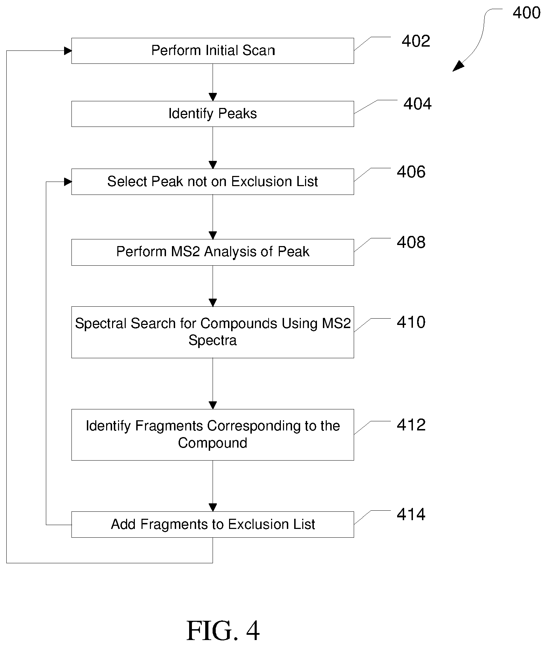

Figure 4 is a flow diagram illustrating a method of data dependent analysis 400 utilizing real-time spectral search results. At 402, a survey scan can be performed. The survey scan can be used to identified precursor ions for further analysis. Generally, the precursor scan can be performed without intentional fragmentation, such as by setting a fragmentation cell to a low fragmentation energy below the threshold needed to cause significant fragmentation or by selecting trapping conditions to minimize fragmentation.

At 404, peaks can be identified in the survey scan. Various techniques are known in the art to identify peaks from a mass spectrum. Typically, some approximation of the center of the peak is used to identify the mass-to-charge ratio of an ion.

At 406, a peak can be selected for analysis. In various embodiments, a precursor ion with the highest abundance can be selected. In other embodiments, precursors may be selected at least in part based on an inclusion list. The inclusion list can include mass-to-charge ratios or m/z ranges of particular interest, and when ions are detected within those ranges, they can be selected for MS2 analysis. In further embodiments, an exclusion list can be used to avoid listed precursor ions, such as a precursor ion that was previously analyzed or fragments thereof. Many other criteria have been employed to select ions for analysis. Often these criteria are combined together to compromise a list of rules. These additional criteria include but aren't limited too: charge state, monoisotopic m/z assignment, isotope ratio, and mass difference.

At 408, the MS2 analysis can be performed on the selected peak. In the first stage, the precursor ion can be selected based on the mass-to-charge ratio identified from the survey scan. The selected ion can be fragmented to produce product ions and then the mass-to-charge ratios of the product ions can be identified.

At 410, a spectral analysis can be performed to identify the compound based on the fragment ions in the MS2 spectra. In various embodiments, this spectral analysis may compromise a database search or use of an algorithm to identify compounds based on the fragmentation pattern observed in the MS2 spectra. At 412, the fragments associated with the compound can be identified. In various embodiments, the fragments can include fragments in the MS2 spectra. Additionally, the fragments can include theoretical fragments that are not present in the MS2 spectra but may be theoretically possible based upon the precursor identification. In various embodiments, fragments produced under the conditions of the MS1 scan that may not be detected under the conditions of the MS2 scan can be identified. Additionally, the theoretical exact mass of the fragments can be assigned to the observed fragment ions.

At 414, the identified fragments can be added to an exclusion list. In various embodiments, the exclusion list can include the exact mass of the fragment, allowing for a mass range corresponding to the mass accuracy or resolution of the mass analyzer used to collect the initial survey scan. In various embodiments, the exclusion list can be further based on the mass accuracy or resolution of a mass analyzer used to collect the MS1 spectrum, such as by including a mass range determined by the theoretical exact mass and the mass accuracy or resolution of the mass analyzer. In various embodiments, the exclusion list can include peaks found in the MS2 spectra and/or theoretical fragments of the precursor compound identified by the spectral search, including theoretical fragments not found in the MS2 spectra. Another peak can be selected for analysis at 406. Additionally, an additional survey scan at 402 can be performed periodically as the ions and their identities can change throughout a chromatographic run. Additionally, compounds can be removed from the exclusion list periodically, such as based on the expected chromatographic elution time or peak width.

In various embodiments, modern spectral matching algorithms can simulate the MSn fragmentation spectra based upon the predicted peptide sequence and expected fragmentation energy. In this context, an expected product spectrum used for matching can be simulated using the higher energy MS2 fragmentation conditions, but the ions added to the exclusion list can be based on a simulated product spectrum generated using much gentler energetic conditions of the MS1 scan. As an alternative approach, many small molecule libraries contain fragmentation spectra collected over a range of energies. Higher energy fragmentation spectra can be used for matching the MS2 scan and the exclusion list can be based on lower energy fragmentation spectra. Significantly, as seen with the y₉⁺² fragment, higher energy fragmentation can lead to further fragmentation of multiply charged fragment ions that may be present in the MS1 spectra and identifying those fragments based on the lower energy fragmentation can be important for avoiding collecting redundant data and maximizing the amount of useful data collected.

In other embodiments the "real time search" may not involve a database search at all. Rather the real-time identification of the parent compound may come from an algorithm designed to identify the parent compound (e.g., *"de novo* analysis").

There are many ion activation and fragmentation approaches that do not rely upon collisions with neutral gas molecules(e.g., ETD, ECD, UVPD). These alternative fragmentation processes often generate product ions that are different from the ions formed by energetic activation (e.g., c- and z-type product ions of peptides vs. b- and y-type). In this context, ions can be identified using an MS2 spectrum formed via a non-collision-with-neutral fragmentation process and expected fragment ion patterns for the non-collision-with-neutral fragmentation process, and then use that identification can be used to predict the product ions formed via collisional fragmentation. For example, identify an ETD MS2 spectrum of a peptide ion using real time search and then exclude the theoretical b- and y-type product ions produced by energetic fragmentation based upon the peptide sequence.

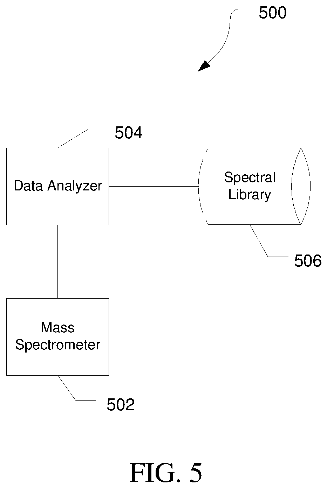

Figure 5 illustrates a system 500 for performing data dependent analysis using real-time spectral matching. The system can include a mass spectrometer 502, such as mass spectrometer 100 in Figure 1, a data analyzer 504, and a spectral library 506. In various embodiments, the data analyzer 504 and the spectral library 506 can reside locally with the mass spectrometer 502, such as on a computer system controlling the mass spectrometer 502. In other embodiments, the data analyzer 504 can reside locally with the mass spectrometer 502 and the spectral library 506 can be cloud based. With a cloud based spectral library 506 , it can be advantageous for the data analyzer 504 to locally cache a portion of the spectral library 506. In yet another embodiment, the data analyzer 504 and the spectral library 506 can be cloud based.

Mass spectrometer 502 can provide an MS2 spectrum to data analyzer 504. Data analyzer 504 can perform spectral matching of the MS2 spectra to the spectral library 506 and can identify the compound. Additionally, data analyzer 504 can identify fragment ions of the compound either through simulation or based on the spectral library 506. Data analyzer 504 can provide an exclusion list of fragment ions to the mass spectrometer 502. Mass spectrometer 502 can perform additional analysis based on the exclusion list.

While the present teachings are described in conjunction with various embodiments, it is not intended that the present teachings be limited to such embodiments.

Further, in describing various embodiments, the specification may have presented a method and/or process as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process should not be limited to the performance of their steps in the order written, and one skilled in the art can readily appreciate that the sequences may be varied.

## Claims

1. A method comprising:
obtaining a first mass spectrum (402);
selecting a first peak of the first mass spectrum (406); and
fragmenting and analyzing ions of the first peak to obtain a second mass spectrum (408);
performing a real-time spectral search for compounds corresponding to peaks in the second mass spectrum (410);
identifying fragments for the compounds identified based on the real-time spectral search (412);
adding mass-to-charge ratios for the identified fragments to an exclusion list (414);
selecting a second peak present in the first mass spectrum and not on the exclusion list; and
fragmenting and analyzing ions of the second peak to obtain a third mass spectrum.

2. The method of claim 1, wherein the mass-to-charge ratio added to the exclusion list is based on the theoretical mass-to-charge ratio for the identified fragments of the compound identified and the mass accuracy or resolution of a mass analyzer used to collect the first mass spectrum.

3. The method of claim 2, wherein the first mass spectrum is at a higher mass accuracy or resolution than the second mass spectrum.

4. The method of claim 3, wherein performing a real-time spectral search is based on a mass accuracy or resolution of the second mass spectrum and adding mass-to-charge ratios for the identified fragments to the exclusion list is based on a mass accuracy or resolution of the first mass spectrum.

5. The method of any preceding claim, wherein adding mass-to-charge ratios for the identified fragments to an exclusion list includes peaks found in the second mass spectrum.

6. The method of any preceding claim, wherein adding mass-to-charge ratios for the identified fragments to an exclusion list includes theoretical fragments identified by the real-time spectral search.

7. The method of claim 6, wherein adding mass-to-charge ratios for the identified fragments to an exclusion list includes theoretical fragments identified by the real-time spectral search and not present in the second mass spectrum.

8. The method of claim 6 or claim 7, wherein performing a real-time spectral search is based on a high fragmentation energy of the second mass spectrum and the identified fragments added to the exclusion list are based on a low fragmentation energy of the compound identified in the second mass spectrum.

9. The method of any preceding claim, wherein the fragment ions in the second mass spectrum are generated by UVPD, ETD, ECD, or another fragmenting process that does not utilize collisions with neutral gas molecules; and wherein performing a real-time spectral search is based on expected fragment ion patterns of a fragmentation process used in the second mass spectrum and the identified fragments added to the exclusion list are based on standard neutral collision based fragmentation of the compound identified in the second mass spectrum.

10. A mass spectrometer (100), comprising:
an ion source (102) configured to ionize a sample to produce ions;
a first mass analyzer (104) configured to produce a mass spectrum; and
a controller (108) configured to
obtain a first mass spectrum using the mass analyzer (104);
select a first peak of the first mass spectrum; and
fragment and analyze ions of the first peak to obtain a second mass spectrum using the mass analyzer (104);
perform a real-time spectral search for compounds corresponding to peaks in the second mass spectrum;
identify fragments for the compounds identified based on the real-time search;
add mass-to-charge ratios for the identified fragments to an exclusion list;
select a second peak from the first mass spectrum and not on the exclusion list; and
fragment and analyze ions of the second peak to obtain a third mass spectrum using the mass analyzer (104).

11. The mass spectrometer (100) of claim 10, wherein adding mass-to-charge ratios for the identified fragments to an exclusion list includes peaks found in the second mass spectrum.

12. The mass spectrometer (100) of claim 10 or claim 11, wherein adding mass-to-charge ratios for the identified fragments to an exclusion list includes theoretical fragments of the compound identified by the real-time search.

13. The mass spectrometer (100) of any of claims 10 through 12, wherein the real-time spectral search is based on a high fragmentation energy of the second mass spectrum and the identified fragments added to the exclusion list are identified based on a low fragmentation energy of the compound identified in the second mass spectrum.

14. The mass spectrometer (100) of claims 10 through 12, wherein the fragment ions in the second mass spectrum are generated by UVPD, ETD, ECD, or another fragmenting process that does not utilize collisions with neutral gas molecules, and wherein performing a real-time spectral search is based on expected fragment ion patterns of a fragmentation process used in the second mass spectrum and the identified fragments added to the exclusion list are based on standard neutral collision based fragmentation of the compound identified in the second mass spectrum.

15. The mass spectrometer (100) of claim 12, wherein the first mass spectrum is at a higher mass accuracy or resolution than the second mass spectrum, and the real-time spectral search is based on a mass accuracy or resolution of the second mass spectrum and the mass-to-charge ratios added to the exclusion list are based on a mass accuracy or resolution of the first mass spectrum.

## Patentansprüche

1. Verfahren, umfassend:
Erhalten eines ersten Massenspektrums (402);
Auswählen eines ersten Peaks des ersten Massenspektrums (406); und
Fragmentieren und Analysieren von Ionen des ersten Peaks, um ein zweites Massenspektrum zu erhalten (408);
Durchführen einer Echtzeit-Spektralsuche nach Verbindungen, die Peaks im zweiten Massenspektrum entsprechen (410);
Identifizieren von Fragmenten für die Verbindungen, die auf der Basis der Echtzeit-Spektralsuche identifiziert wurden (412);
Hinzufügen von Masse-zu-Ladung-Verhältnissen für die identifizierten Fragmente zu einer Ausschlussliste (414);
Auswählen eines zweiten Peaks, der im ersten Massenspektrum vorhanden ist und nicht auf der Ausschlussliste steht; und
Fragmentieren und Analysieren von Ionen des zweiten Peaks, um ein drittes Massenspektrum zu erhalten.

2. Verfahren nach Anspruch 1, wobei das zur Ausschlussliste hinzugefügte Masse-zu-Ladung-Verhältnis auf dem theoretischen Masse-zu-Ladung-Verhältnis für die identifizierten Fragmente der identifizierten Verbindung und der Massengenauigkeit oder Auflösung eines Massenanalysators basiert, der zum Erfassen des ersten Massenspektrums verwendet wurde.

3. Verfahren nach Anspruch 2, wobei das erste Massenspektrum eine höhere Massengenauigkeit oder Auflösung aufweist als das zweite Massenspektrum.

4. Verfahren nach Anspruch 3, wobei das Durchführen einer Echtzeit-Spektralsuche auf einer Massengenauigkeit oder Auflösung des zweiten Massenspektrums basiert und das Hinzufügen von Masse-zu-Ladung-Verhältnissen für die identifizierten Fragmente zur Ausschlussliste auf einer Massengenauigkeit oder Auflösung des ersten Massenspektrums basiert.

5. Verfahren nach einem der vorstehenden Ansprüche, wobei das Hinzufügen von Masse-zu-Ladung-Verhältnissen für die identifizierten Fragmente zu einer Ausschlussliste die im zweiten Massenspektrum gefundenen Peaks einschließt.

6. Verfahren nach einem der vorstehenden Ansprüche, wobei das Hinzufügen von Masse-zu-Ladung-Verhältnissen für die identifizierten Fragmente zu einer Ausschlussliste theoretische Fragmente einschließt, die durch die Echtzeit-Spektralsuche identifiziert wurden.

7. Verfahren nach Anspruch 6, wobei das Hinzufügen von Masse-zu-Ladung-Verhältnissen für die identifizierten Fragmente zu einer Ausschlussliste theoretische Fragmente einschließt, die durch die Echtzeit-Spektralsuche identifiziert wurden und im zweiten Massenspektrum nicht vorhanden sind.

8. Verfahren nach Anspruch 6 oder Anspruch 7, wobei das Durchführen einer Echtzeit-Spektralsuche auf einer hohen Fragmentierungsenergie des zweiten Massenspektrums basiert und die identifizierten Fragmente, die zur Ausschlussliste hinzugefügt werden, auf einer niedrigen Fragmentierungsenergie der im zweiten Massenspektrum identifizierten Verbindung basieren.

9. Verfahren nach einem der vorstehenden Ansprüche, wobei die Fragmentionen im zweiten Massenspektrum durch UVPD, ETD, ECD oder einen anderen Fragmentierungsprozess generiert werden, bei dem keine Kollisionen mit neutralen Gasmolekülen verwendet werden; und wobei das Durchführen einer Echtzeit-Spektralsuche auf erwarteten Fragmentionenmustern eines im zweiten Massenspektrum verwendeten Fragmentierungsprozesses basiert und die zur Ausschlussliste hinzugefügten identifizierten Fragmente auf einer standardmäßigen neutralen kollisionsbasierten Fragmentierung der im zweiten Massenspektrum identifizierten Verbindung basieren.

10. Massenspektrometer (100), umfassend:
eine Ionenquelle (102), die konfiguriert ist, um eine Probe zu ionisieren, um Ionen zu erzeugen;
einen ersten Massenanalysator (104), der konfiguriert ist, um ein Massenspektrum zu erzeugen; und
eine Steuerung (108), die konfiguriert ist zum:
Erhalten eines ersten Massenspektrums unter Verwendung des Massenanalysators (104);
Auswählen eines ersten Peaks des ersten Massenspektrums; und
Fragmentieren und Analysieren von Ionen des ersten Peaks, um unter Verwendung des Massenanalysators (104) ein zweites Massenspektrum zu erhalten;
Durchführen einer Echtzeit-Spektralsuche nach Verbindungen, die den Peaks im zweiten Massenspektrum entsprechen;
Identifizieren von Fragmenten für die Verbindungen, die auf der Basis der Echtzeitsuche identifiziert wurden;
Hinzufügen von Masse-zu-Ladung-Verhältnissen für die identifizierten Fragmente zu einer Ausschlussliste;
Auswählen eines zweiten Peaks aus dem ersten Massenspektrum und nicht aus der Ausschlussliste; und
Fragmentieren und Analysieren von Ionen des zweiten Peaks, um unter Verwendung des Massenanalysators (104) ein drittes Massenspektrum zu erhalten.

11. Massenspektrometer (100) nach Anspruch 10, wobei das Hinzufügen von Masse-zu-Ladung-Verhältnissen für die identifizierten Fragmente zu einer Ausschlussliste die im zweiten Massenspektrum gefundenen Peaks einschließt.

12. Massenspektrometer (100) nach Anspruch 10 oder Anspruch 11, wobei das Hinzufügen von Masse-zu-Ladung-Verhältnissen für die identifizierten Fragmente zu einer Ausschlussliste theoretische Fragmente der durch die Echtzeitsuche identifizierten Verbindung einschließt.

13. Massenspektrometer (100) nach einem der Ansprüche 10 bis 12, wobei die Echtzeit-Spektralsuche auf einer hohen Fragmentierungsenergie des zweiten Massenspektrums basiert und die zur Ausschlussliste hinzugefügten identifizierten Fragmente auf der Basis einer niedrigen Fragmentierungsenergie der im zweiten Massenspektrum identifizierten Verbindung identifiziert werden.

14. Massenspektrometer (100) nach den Ansprüchen 10 bis 12, wobei die Fragmentionen im zweiten Massenspektrum durch UVPD, ETD, ECD oder einen anderen Fragmentierungsprozess generiert werden, der keine Kollisionen mit neutralen Gasmolekülen nutzt, und wobei die Durchführung einer Echtzeit-Spektralsuche auf erwarteten Fragmentionenmustern eines im zweiten Massenspektrum verwendeten Fragmentierungsprozesses basiert und die zur Ausschlussliste hinzugefügten identifizierten Fragmente auf einer standardmäßigen, auf neutraler Kollision basierenden Fragmentierung der im zweiten Massenspektrum identifizierten Verbindung basieren.

15. Massenspektrometer (100) nach Anspruch 12, wobei das erste Massenspektrum eine höhere Massengenauigkeit oder Auflösung aufweist als das zweite Massenspektrum und die Echtzeit-Spektralsuche auf einer Massengenauigkeit oder Auflösung des zweiten Massenspektrums basiert, und die zur Ausschlussliste hinzugefügten Masse-zu-Ladung-Verhältnisse auf einer Massengenauigkeit oder Auflösung des ersten Massenspektrums basieren.

## Revendications

1. Procédé comprenant :
l'obtention d'un premier spectre de masse (402) ;
la sélection d'un premier pic du premier spectre de masse (406) ; et
la fragmentation et l'analyse des ions du premier pic pour obtenir un deuxième spectre de masse (408) ;
la réalisation d'une recherche spectrale en temps réel des composés correspondant aux pics du deuxième spectre de masse (410) ;
l'identification des fragments pour les composés identifiés sur la base de la recherche spectrale en temps réel (412) ;
l'ajout des rapports masse/charge des fragments identifiés à une liste d'exclusion (414) ;
la sélection d'un second pic présent dans le premier spectre de masse et ne figurant pas sur la liste d'exclusion ; et
la fragmentation et l'analyse des ions du second pic pour obtenir un troisième spectre de masse.

2. Procédé selon la revendication 1, dans lequel le rapport masse/charge ajouté à la liste d'exclusion est basé sur le rapport masse/charge théorique pour les fragments identifiés du composé identifié et sur la précision ou la résolution de masse d'un analyseur de masse utilisé pour collecter le premier spectre de masse.

3. Procédé selon la revendication 2, dans lequel le premier spectre de masse a une précision ou une résolution de masse plus élevée que le deuxième spectre de masse.

4. Procédé selon la revendication 3, dans lequel l'exécution d'une recherche spectrale en temps réel est basée sur une précision de masse ou une résolution du deuxième spectre de masse et l'ajout de rapports masse/charge pour les fragments identifiés à la liste d'exclusion est basé sur une précision de masse ou une résolution du premier spectre de masse.

5. Procédé selon l'une quelconque des revendications précédentes, dans lequel l'ajout des rapports masse/charge des fragments identifiés à une liste d'exclusion comporte les pics trouvés dans le deuxième spectre de masse.

6. Procédé selon l'une quelconque des revendications précédentes, dans lequel l'ajout des rapports masse/charge des fragments identifiés à une liste d'exclusion comporte les fragments théoriques identifiés par la recherche spectrale en temps réel.

7. Procédé selon la revendication 6, dans lequel l'ajout des rapports masse/charge des fragments identifiés à une liste d'exclusion comporte les fragments théoriques identifiés par la recherche spectrale en temps réel et non présents dans le deuxième spectre de masse.

8. Procédé selon la revendication 6 ou selon la revendication 7, dans lequel la recherche spectrale en temps réel est basée sur une énergie de fragmentation élevée du deuxième spectre de masse et les fragments identifiés ajoutés à la liste d'exclusion sont basés sur une énergie de fragmentation faible du composé identifié dans le deuxième spectre de masse.

9. Procédé selon toute quelconque revendication précédente, dans lequel les ions fragments du deuxième spectre de masse sont générés par UVPD, ETD, ECD, ou un autre processus de fragmentation qui n'utilise pas de collisions avec des molécules de gaz neutres ; et dans lequel la recherche spectrale en temps réel est basée sur les modèles d'ions fragments attendus d'un processus de fragmentation utilisé dans le deuxième spectre de masse et les fragments identifiés ajoutés à la liste d'exclusion sont basés sur la fragmentation standard par collision neutre du composé identifié dans le deuxième spectre de masse.

10. Spectromètre de masse (100), comprenant :
une source d'ions (102) configurée pour ioniser un échantillon pour produire des ions ;
un premier analyseur de masse (104) configuré pour produire un spectre de masse ; et
un dispositif de commande (108) configuré pour :
obtenir un premier spectre de masse à l'aide de l'analyseur de masse (104) ;
sélectionner un premier pic du premier spectre de masse ; et
fragmenter et analyser les ions du premier pic pour obtenir un deuxième spectre de masse à l'aide de l'analyseur de masse (104) ;
effectuer une recherche spectrale en temps réel des composés correspondant aux pics du deuxième spectre de masse ;
identifier des fragments pour les composés identifiés sur la base de la recherche en temps réel ;
ajouter les rapports masse/charge des fragments identifiés à une liste d'exclusion ;
sélectionner un deuxième pic du premier spectre de masse qui ne figure pas sur la liste d'exclusion ; et
fragmenter et analyser les ions du deuxième pic pour obtenir un troisième spectre de masse à l'aide de l'analyseur de masse (104).

11. Spectromètre de masse (100) selon la revendication 10, dans lequel l'ajout des rapports masse/charge pour les fragments identifiés à une liste d'exclusion comporte les pics trouvés dans le deuxième spectre de masse.

12. Spectromètre de masse (100) selon la revendication 10 ou selon la revendication 11, dans lequel l'ajout de rapports masse/charge pour les fragments identifiés à une liste d'exclusion comporte des fragments théoriques du composé identifié par la recherche en temps réel.

13. Spectromètre de masse (100) selon l'une quelconque des revendications 10 à 12, dans lequel la recherche spectrale en temps réel est basée sur une énergie de fragmentation élevée du deuxième spectre de masse et les fragments identifiés ajoutés à la liste d'exclusion sont identifiés sur la base d'une énergie de fragmentation faible du composé identifié dans le deuxième spectre de masse.

14. Spectromètre de masse (100) selon les revendications 10 à 12, dans lequel les ions fragiles du deuxième spectre de masse sont générés par UVPD, ETD, ECD ou un autre processus de fragmentation qui n'utilise pas de collisions avec des molécules de gaz neutre, et dans lequel la recherche spectrale en temps réel est basée sur les modèles d'ions fragiles attendus d'un processus de fragmentation utilisé dans le deuxième spectre de masse et les fragments identifiés ajoutés à la liste d'exclusion sont basés sur une fragmentation standard basée sur des collisions neutres du composé identifié dans le deuxième spectre de masse.

15. Spectromètre de masse (100) selon la revendication 12, dans lequel le premier spectre de masse a une précision ou une résolution de masse plus élevée que le deuxième spectre de masse, et la recherche spectrale en temps réel est basée sur une précision ou une résolution de masse du deuxième spectre de masse et les rapports masse/charge ajoutés à la liste d'exclusion sont basés sur une précision ou une résolution de masse du premier spectre de masse.
